# FASCICULE DE BREVET EUROPEEN

(11) **EP 4 187 144 B1**
(45) Date de publication et mention de la délivrance du brevet: **01.01.2025**
(21) Numéro de dépôt: 22209311.4
(22) Date de dépôt: 24.11.2022
(51) Int. Cl.: F17C 13/00

(54) **RESERVOIR CRYOGENIQUE AMELIORE POUR AERONEF ET AERONEF COMPRENANT UN TEL RESERVOIR**
VERBESSERTER KRYOGENER TANK FÜR EIN FLUGZEUG UND FLUGZEUG MIT EINEM SOLCHEN TANK
IMPROVED CRYOGENIC TANK FOR AIRCRAFT AND AIRCRAFT COMPRISING SUCH A TANK

(30) Priorité: 25.11.2021 FR 2112543
(43) Date de publication de la demande: 31.05.2023
(73) Titulaire: Airbus Opérations SAS, 31060 Toulouse Cedex 09 (FR)
(72) Inventeur: Vercamer, Tanguy, 31060 TOULOUSE (FR); Penven, Benoit, 31060 TOULOUSE (FR); Goupil, Frédéric, 31060 TOULOUSE (FR)
(74) Mandataire: Cabinet Le Guen Maillet

(56) Documents cités:
- EP-A1- 3 458 769
- CN-U- 203 771 028
- DE-U1- 202005 006 024
- FR-A1- 3 078 764
- US-A1- 2014 166 662
- US-A1- 2017 130 900

## Description

### DOMAINE TECHNIQUE

La présente invention concerne un réservoir de fluide cryogénique. L'invention concerne plus particulièrement un réservoir de stockage d'hydrogène liquide pour le stockage d'hydrogène à bord d'un aéronef, et un aéronef embarquant un tel réservoir de stockage.

### ÉTAT DE LA TECHNIQUE ANTÉRIEURE

L'hydrogène liquide (ou plus précisément le dihydrogène liquide) peut être utilisé comme source d'énergie à bord d'un aéronef, pour alimenter une pile à combustible, ou encore pour opérer une combustion directe. Le stockage de l'hydrogène liquide utilisé à bord d'un aéronef requiert des précautions toutes particulières, eu égard à la grande inflammabilité de l'hydrogène en présence de d'oxygène. Le réseau de distribution d'hydrogène à bord de l'aéronef, ainsi que le ou les réservoirs de stockage doivent être conçus pour prévenir tout risque de fuite et présenter pour ce faire de nombreuses caractéristiques réunies et décrites dans des normes de fabrication, de test et de certification. Pour répondre à des contraintes de place dans un aéronef, l'hydrogène est préférentiellement stocké sous sa forme liquide, à une température de -253°C (20K), par exemple. Une telle température de stockage a des effets sur les installations de stockage et de distribution, et éventuellement sur des éléments proches de ces installations.

Les réservoirs de stockage de l'hydrogène liquide prennent habituellement la forme d'une double cuve comprenant notamment de l'aluminium et/ou un ou des matériaux composites. Le plus souvent une cuve interne est agencée dans une cuve externe, encore appelée enveloppe extérieure, et un volume entre ces deux cuves permet de créer une isolation thermique. Les propriétés mécaniques des différents matériaux varient en fonction de la température, et la température de composants d'un réservoir d'hydrogène varie conséquemment selon les phases d'utilisation (à vide, remplissage, consommation, etc.). Ainsi, selon la structure d'un réservoir d'hydrogène liquide, de fortes contraintes mécaniques peuvent exister du fait des différences de coefficients d'expansion entre les matériaux et/ou d'expansion entre les différents éléments.

Des liaisons mécaniques coulissantes (ou « liaisons glissières ») sont donc prévues entre la cuve interne et l'enveloppe extérieure d'un réservoir d'hydrogène liquide, par exemple en utilisant un manchon qui coulisse entre deux cols cylindriques dont l'un est agencé à l'extrémité de la cuve interne (à l'extérieur de celle-ci) et l'autre est agencé à l'extrémité de l'enveloppe extérieure (à l'intérieur de celle-ci ou autour d'une ouverture vers l'extérieur de celle-ci). Une telle structure permettant une liaison coulissante entre les extrémités respectives de la cuve interne et de l'enveloppe extérieure situées d'un même côté (pôle) du réservoir d'hydrogène présente cependant des inconvénients. Il est notamment difficile de déterminer certaines conditions de charges du fait de variations de conditions de température et de forces inertielles. En outre, un phénomène de fatigue fragilise les éléments d'une telle structure du fait de déplacements répétés et un risque de coincement risque d'en découler, du fait d'une usure par frottements. De plus, les procédés d'assemblage peuvent être complexes dans la mesure où une telle structure ne tolère que peu ou pas de tolérances d'ajustement quant à la coaxialité entre une cuve interne et une enveloppe extérieure d'un tel réservoir. Le document FR3078764A1 traite d'un réservoir de fluide cryogénique.

La situation peut être améliorée.

### EXPOSÉ DE L'INVENTION

Un objet de la présente invention est de proposer un réservoir cryogénique pour aéronef qui pallie au moins certains des inconvénients de l'art antérieur.

A cet effet, il est proposé un réservoir de stockage d'un fluide cryogénique selon la revendication 1.

Avantageusement, il est ainsi possible d'opérer une liaison mécanique coulissante entre la cuve interne, ou plus précisément l'une au moins de ses extrémités, et l'enveloppe extérieure de façon fiable, en augmentant la résistance à l'usure et en facilitant l'assemblage du réservoir.

Le réservoir de stockage d'un fluide cryogénique selon l'invention peut également comporter les caractéristiques suivantes, considérées seules ou en combinaison :
- Le matériau déformable est de l'élastomère.
- Le matériau déformable comprend une pluralité d'inserts métalliques agencés parallèlement à la direction X.

Un autre objet de l'invention est un aéronef comprenant au moins un réservoir de stockage d'un fluide cryogénique tel que précédemment décrit.

### BRÈVE DESCRIPTION DES DESSINS

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
[Fig. 1] est un schéma de principe illustrant l'agencement d'un réservoir cryogénique selon un premier mode de réalisation ;
[Fig. 2] est une vue en perspective d'un ensemble de fixation entre une cuve interne et une enveloppe extérieure d'un réservoir tel qu'illustré sur la Fig. 1, avant assemblage ;
[Fig. 3] est une coupe de l'ensemble de fixation représenté sur la Fig. 2, après assemblage ;
[Fig. 4] est une vue en perspective de l'ensemble de fixation entre une cuve interne et une enveloppe extérieure d'un réservoir cryogénique représenté sur les Fig. 2 et Fig. 3, selon une variante de réalisation et avant assemblage ;
[Fig. 5] est une coupe de l'ensemble de fixation représenté sur la Fig. 4, après assemblage ; et,
[Fig. 6] illustre un aéronef comprenant un réservoir cryogénique tel que déjà illustré sur la Fig. 1.

### EXPOSÉ DÉTAILLÉ DE MODES DE RÉALISATION

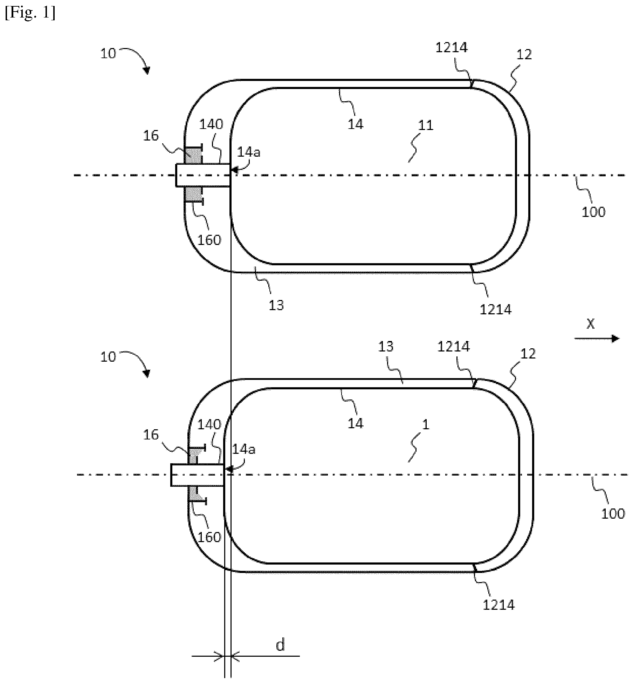

La **Fig. 1** représente de façon schématique un réservoir cryogénique 10 configuré pour le stockage d'hydrogène liquide à bord d'un aéronef, selon un mode de réalisation. Le terme « réservoir cryogénique » désigne ici un réservoir configuré pour le stockage d'un liquide cryogénique, tel que de l'hydrogène sous sa forme liquide, par exemple. Dans la présente description, les termes « hydrogène » et « hydrogène liquide » sont utilisés indifféremment et désignent du dihydrogène sous forme liquide éventuellement accompagné d'un gaz inerte ou d'hydrogène à l'état gazeux. La partie supérieure de la Fig. 1 illustre le réservoir 10 lorsqu'il contient une quantité d'hydrogène liquide 11 et la partie inférieure de la Fig. 1 illustre le réservoir 10 ne contenant que de l'air ambiant 1. Ainsi, la cuve interne 14 voit sa longueur augmentée d'une longueur d, par dilatation, lorsqu'elle contient l'air ambiant 1, par rapport à sa longueur lorsqu'elle contient l'hydrogène liquide 11. La température de l'hydrogène à l'état liquide donne une forme contractée à la cuve interne 14 par rapport à sa forme à température ambiante. Le réservoir 10 d'hydrogène comprend une cuve interne 14 et une enveloppe extérieure 12 agencées autour d'un même axe longitudinal 100. La cuve interne 14 et l'enveloppe extérieure 12 sont chacune de forme globalement cylindrique et présentent des extrémités globalement sphériques nommées pôles. La cuve interne 14 présente un volume inférieur à celui de l'enveloppe extérieure 12, de sorte qu'un volume d'isolation thermique 13 existe entre la surface extérieure de la cuve interne 14 et la surface intérieure de l'enveloppe extérieure 12. Selon un mode de réalisation, un vide peut être créé dans le volume d'isolation thermique 13 lors de la fabrication du réservoir 10 ou par l'utilisation d'une pompe à vide lors de l'utilisation du réservoir dans une installation. Selon une variante, un matériau isolant ou plusieurs couches de matériaux isolants sont utilisés pour opérer une isolation thermique entre la cuve interne 14 et l'enveloppe extérieure 12.

Selon un mode de réalisation, la cuve interne 14 et l'enveloppe extérieure 12 sont maintenues à distance l'une de l'autre au niveau de l'un des pôles du réservoir 10 ou à proximité de celui-ci par un ensemble d'entretoises 1214 régulièrement positionnées et fixées entre la surface extérieure de la cuve interne 14 et l'enveloppe extérieure 12. En outre, une liaison coulissante (liaison glissière) entre l'extrémité 14a de la cuve interne 14 et l'enveloppe extérieure 12 est implémentée au niveau du pôle opposé du réservoir 10, aux fins de limiter les contraintes mécaniques produites par l'expansion ou la contraction de la cuve interne 14 lors des variations de température ou du fait de la pression de l'hydrogène contenu dans la cuve interne 14, notamment lors des variations de température de la cuve interne 14 du fait de la température de son contenu. Selon un mode de réalisation, les entretoises 1214 sont remplacées par des moyens de fixation 1214 équivalents configurés pour réduire au maximum les ponts thermiques entre la cuve interne 14 et l'enveloppe extérieure 12 et pour réduire en conséquence l'effet de tels ponts thermiques. Par exemple, les entretoises 1214 sont remplacées par des liaisons encastrées permettant une reprise d'effort transférés sur la cuve interne 14, selon une direction parallèle à l'axe longitudinal 100 de la cuve interne 14, et plus généralement du réservoir 10. En effet, la liaison coulissant de type glissière agencée à l'autre extrémité du réservoir sert principalement à compenser la dilatation selon une direction parallèle à l'axe longitudinal du réservoir 10.

Avantageusement, la liaison mécanique coulissante entre l'extrémité 14a de la cuve interne 14 et l'extrémité de l'enveloppe extérieure 12 disposée en regard de l'extrémité 14a de la cuve interne 14 comprend un élément amortisseur 16 configuré pour opérer un calage de l'extrémité 14a par rapport à l'enveloppe extérieure 12. Le terme « calage » désigne ici un positionnement ajusté et un maintien efficace de l'extrémité 14a de la cuve interne par rapport au pôle de l'enveloppe extérieure 12 qui lui fait face, et donc de la cuve interne 14 par rapport à l'enveloppe extérieure 12, tout en présentant une liaison coulissante permettant de compenser les variations de dimensions des éléments, dont notamment la cuve interne 14. Ainsi, un calage opéré par l'élément amortisseur 16 entre l'extrémité 14a de la cuve 14 et le pôle de l'enveloppe extérieure 12 qui lui fait face implique qu'un élément fixé solidairement de l'extrémité 14a soit positionné en appui contre une première surface de l'élément amortisseur 16 et qu'un élément fixé solidairement du pôle de l'enveloppe extérieure 12 situé du même côté du réservoir 10 que l'extrémité 14a de la cuve interne 14, soit en appui sur au moins une deuxième surface de l'élément amortisseur 16, la première et la deuxième surfaces étant globalement opposées l'une par rapport à l'autre, de sorte que l'élément amortisseur 16 soit maintenu (pris en « sandwich ») entre l'extrémité 14a de la cuve interne 14 et le pôle qui lui fait face de l'enveloppe extérieure 12, et opère *a minima* un calage selon une direction X parallèle à l'axe longitudinal 100 commun à la cuve interne 14 et à l'enveloppe extérieure 12. Avantageusement, l'élément amortisseur 16 est réalisé dans un matériau déformable, ce qui lui permet de maintenir la cuve interne 14 dans une position stable tout en compensant une variation d'une longueur d de la longueur de la cuve interne 14 en fonction de la température et de la pression interne, notamment en présence d'un fluide cryogénique tel que de l'hydrogène liquide, dans la cuve interne 14. Les termes « matériau déformable » désignent ici un matériau présentant des caractéristiques mécaniques de résistance et de déformation sensiblement égales à celles d'un matériau élastomère.

Selon un mode de réalisation, l'élément amortisseur 16 est fabriqué dans un matériau de type élastomère ou dans un matériau présentant des caractéristiques de compressibilité et d'élasticité similaires à celles de l'élastomère. Avantageusement, des premiers moyens de fixation 140 sont agencés et configurés pour la fixation de l'élément amortisseur 16 sur l'extrémité 14a de la cuve interne 14 et des deuxièmes moyens de fixation 160 sont agencés et configurés pour la fixation de l'élément amortisseur 16 sur le pôle de l'enveloppe extérieure 12 situé du même côté du réservoir 10 que l'extrémité 14a (au niveau d'un même pôle).

Avantageusement, les moyens de fixation 140, 160 et l'élément amortisseur 16 sont configurés pour opérer conjointement un calage selon trois directions orthogonales entre elles, dont la direction X, parallèle à l'axe longitudinal commun 100. En effet, les forces d'inerties et accélérations en présence lors des phases de vol et lors du roulage d'un aéronef embarquant le réservoir 10 ou un réservoir similaire sont telles qu'il convient idéalement d'opérer un calage selon les axes de roulis, de tangage et de lacet de l'aéronef, en plus de compenser les variations de dimensions des éléments décrits liés aux variations de température dans le réservoir 10. A cet effet et selon un mode de réalisation, l'élément amortisseur 16 présente la forme d'une bague ou d'un anneau de section carrée, rectangulaire, ou encore présentant une section de forme quelconque, enfilé sur un manchon fixé à l'extrémité 14a de la cuve interne 14 et logé dans un col ou une rainure agencée dans une ouverture polaire de l'enveloppe extérieure 12. Bien évidemment, une telle structure n'est pas limitative et d'autres structures opérant des fonctions de calage équivalentes entre l'extrémité 14a de la cuve interne 14 et l'enveloppe extérieure 12 peuvent être implémentées autour de l'élément amortisseur 16.

Avantageusement, les propriétés de quasi-incompressibilité de l'élastomère offrent un bon compromis entre le calage opéré et la résistance au cisaillement requis du fait de la déformation de la cuve interne 14 (contraction ou expansion) et des forces de déformation qui en résultent sur l'élément amortisseur 16 maintenu solidaire à la fois des premiers moyens de fixation 140 et des deuxièmes moyens de fixation 160.

Selon un mode de réalisation de l'invention, des inserts métalliques sont présents (insérés à la fabrication) dans l'élément amortisseur 16 aux fins d'ajuster les propriétés d'incompressibilité et de résistance au cisaillement selon différentes directions. Ainsi, selon un mode de réalisation, des inserts métalliques prenant la forme de plaques sont disposés parallèlement à la direction X (et donc à l'axe longitudinal 100).

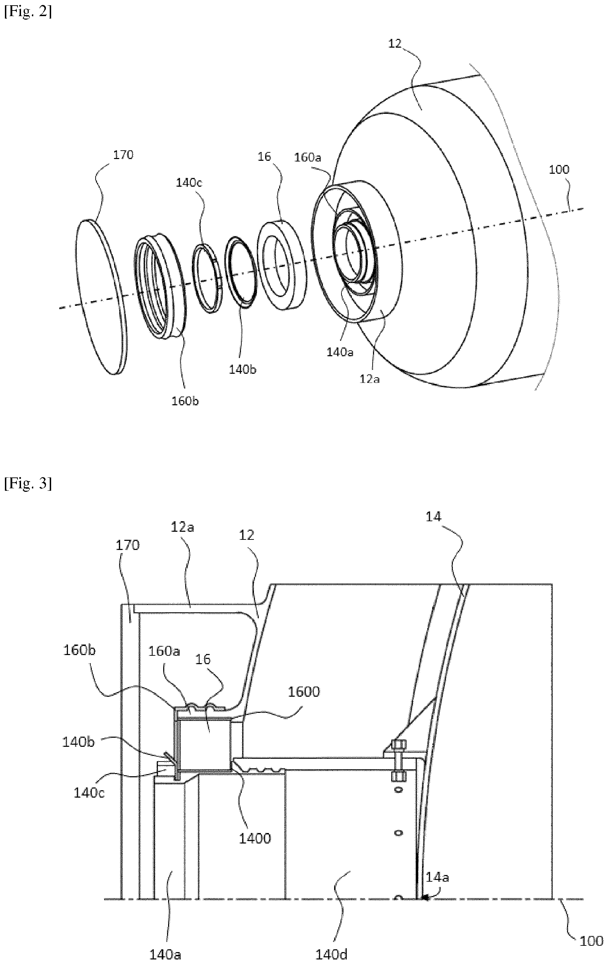

La **Fig. 2** illustre en perspective des détails d'implémentation des premiers moyens de fixation 140 de l'élément amortisseur 16 à la cuve interne 14 et des détails d'implémentation des deuxièmes moyens de fixation 160 de l'élément amortisseur 16 à l'enveloppe extérieure 12, autour d'une ouverture polaire de l'enveloppe 12 du réservoir 10. La Fig. 2 illustre un agencement d'éléments de fixation en vue éclatée, avant assemblage, ayant vocation à être assemblés de façon concentrique ou quasi concentrique autour d'un manchon 140a fixé solidairement à l'extrémité 14a de la cuve interne 14. L'élément amortisseur 16 présentant par exemple la forme d'un anneau de section carrée est configuré pour pouvoir être enfilé sur le manchon 140a, solidaire de l'extrémité 14a de la cuve interne 14 (non visible sur la Fig. 2), d'une part, et pour être en outre au moins partiellement logé dans le col 160a formé autour de l'ouverture polaire de l'enveloppe extérieure 12, d'autre part. Ainsi l'élément amortisseur 16 est configuré pour prendre place entre le manchon 140a et le col 160a. Le manchon 140a présente un épaulement 1400 (visible sur la Fig. 3) et un filetage terminal de sorte qu'un blocage en position de l'élément amortisseur 16 sur le manchon 140a et contre l'épaulement 1400 puisse être réalisé au moyen d'une rondelle 140b et d'un écrou 140c. Selon un mode de réalisation, la rondelle 140b et l'écrou 140c sont crénelés, pour pouvoir opérer un blocage en position, en fin de serrage. Pour ce qui concerne la fixation de l'élément amortisseur 16 dans le col 160a agencé autour de l'ouverture polaire de l'enveloppe extérieure 12, une bague de blocage 160b est configurée pour être positionnée sur la surface extérieure du col 160a, puis sertie sur le col. Selon un mode de réalisation, la fixation de la bague de blocage 160b sur le col 160a est opérée par sertissage mécanique ou par sertissage magnétique, procédé utilisant des impulsions magnétiques pour induire une déformation de deux pièces dont l'une est sertie sur l'autre. Un couvercle polaire 170 est prévu et configuré pour fermer l'ouverture polaire de l'enveloppe 12 après assemblage des éléments précités qui constituent, tout ou partie des premiers moyens de fixation 140 et deuxièmes moyens de fixation 160 de l'élément amortisseur 16. Le couvercle polaire 170 est positionné sur le second col 12a, formé dans l'enveloppe extérieure 12, autour de l'ouverture polaire et de diamètre supérieur au diamètre du col 160a.

La **Fig. 3** est une coupe longitudinale selon un plan comprenant l'axe longitudinal 100 commun à la cuve interne 14 et à l'enveloppe extérieure 12 illustrant les éléments décrits sur la Fig. 2 après assemblage. Le manchon 140a sur lequel est enfilé l'élément amortisseur 16 est maintenu sur l'extrémité 14a de la cuve interne 14 par l'intermédiaire d'un manchon primaire 140d. Ainsi, le manchon 140a et le manchon primaire 140d composent conjointement un manchon unique dont une portion est le manchon 140a. Avantageusement et selon un exemple de réalisation, le manchon 140a est réalisé en Titane et le manchon 140d est réalisé en matériau composite pour minimiser les transferts thermiques vers la cuve interne 14. Selon cet exemple, le manchon 140a est intégré dans le drapage du manchon 140d et les crénelures réalisées dans le manchon 140a permettent d'obtenir une bonne cohésion des fibres du manchon 140d sur le manchon 140a, ces dernières épousant la forme des crénelures lors du drapage du manchon 140d. La Fig. 3 illustre le positionnement de l'élément amortisseur 16 contre l'épaulement 1400 agencé sur la surface extérieure du manchon 140a et la fixation de l'élément amortisseur 16 sur le manchon 140a au moyen d'un serrage écrou - rondelle. Une rondelle 140b est enfilée sur l'extrémité du manchon 140a pour prendre appui sur une face de l'élément amortisseur 16, du côté de l'élément amortisseur opposé à une face prenant appui sur l'épaulement 1400. Un écrou 140c est ensuite serré sur un filetage agencé sur le manchon terminal 140a de sorte que l'élément amortisseur 16 soit alors pris en sandwich entre la rondelle 140b maintenue par l'écrou 140c et l'épaulement 1400 du manchon 140a.

D'autre part, le col 160a agencé autour de l'ouverture polaire est configuré pour offrir un logement à l'élément amortisseur 16 entre lui-même et le manchon 140a. Une fois que l'élément amortisseur 16 est positionné dans ce logement, son blocage en translation selon la direction X est réalisé par le montage et le sertissage de la bague de blocage 160b sur le col 160a.

Selon le mode de réalisation décrit ici, les premiers moyens 140 de fixation de l'élément amortisseur 16 à la cuve interne 14 comprennent donc le manchon primaire 140d fixé sur l'extrémité 14a de la cuve interne 14, le manchon fileté 140a, la rondelle 140b, l'écrou 140c et l'épaulement 1400, et les deuxièmes moyens de fixation 160 de l'élément amortisseur 16 à l'enveloppe extérieure 12 comprennent donc le col 160a, un épaulement 1600 formé dans le col 160a, et la bague de blocage 160b sertie sur le col 160a. Bien évidemment d'autres moyens de fixation opérant des fonctions équivalentes de fixation de l'élément amortisseur 16 à la fois sur la cuve interne 14 et sur l'enveloppe extérieure 12, et donc de calage de la cuve par rapport à l'enveloppe peuvent être implémentés.

Selon une variante du mode de réalisation, le manchon 140a et le manchon primaire 140d peuvent être remplacés par un manchon unique si le matériau utilisé pour la fabrication de ce manchon est à faible conductivité thermique (par exemple, du titane).

La Fig. 3 illustre également le montage du couvercle polaire 170 sur le second col 12a agencé à l'extrémité de l'enveloppe extérieure 12.

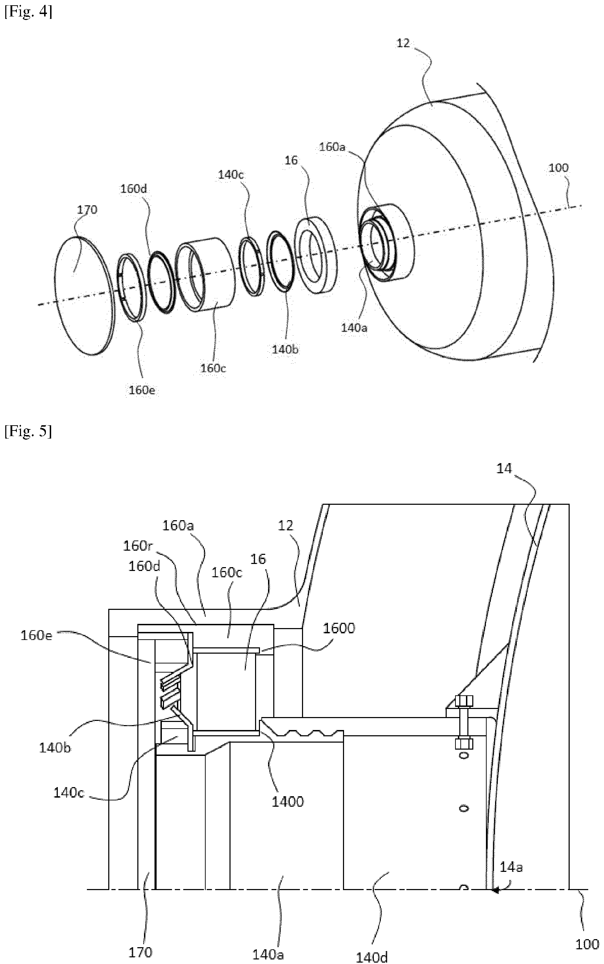

La **Fig. 4** est une vue en perspective qui illustre une variante du mode de réalisation illustré et décrit en rapport avec la Fig. 2, avant assemblage des éléments. Selon cette variante de réalisation, seul le col 160a est formé autour de l'ouverture polaire de l'enveloppe extérieure 12 du réservoir 10, c'est-à-dire que le second col 12a précédemment décrit n'est pas implémenté. Selon cette variante les moyens de fixation 140 de l'élément amortisseur 16 à la cuve interne 14 demeurent inchangés par rapport à ce qui est précédemment décrit mais les moyens de fixation 160 de l'élément amortisseur 16 à l'enveloppe extérieure 12 diffèrent, quant à eux. Selon cette variante de réalisation, une rainure 160r est agencée dans la surface intérieure du col 160a et un insert métallique 160c est logé dans cette rainure, monté par un montage à l'azote liquide, ou encore inséré par moulage, à titre d'exemples. Selon une autre variante, la rainure 160r est remplacée par un taraudage dans la surface intérieure du col 160a, et l'insert 160c, qui présente alors un filetage sur sa surface extérieure, est vissé dans le taraudage. L'insert métallique 160c présente une forme globalement annulaire et un filetage est agencé dans sa surface intérieure ainsi que l'épaulement 1600, usiné en dehors de la zone filetée. Le filetage agencé dans la surface intérieure de l'insert métallique 160c et l'épaulement 1600 sont configurés de sorte que l'élément amortisseur 160 puisse être maintenu entre une rondelle 160d et l'épaulement 1600 et qu'un écrou 160e puisse bloquer en position la rondelle 160d. Ainsi, dans la variante de réalisation selon laquelle l'insert 160c est vissé dans le col 160a de l'enveloppe extérieure 12, l'insert présente deux filetages : un premier filetage, extérieur, pour sa fixation au col 160a et un second filetage, intérieur, pour y visser l'écrou 160e. Avantageusement, la rondelle 160d permet également de freiner l'écrou 160e en rotation par rabat de l'une au moins de ses languettes dans l'une des encoches de l'écrou 160e. Ainsi la partie de l'élément amortisseur 16 la plus éloignée radialement de l'axe longitudinal 100 est prise « en sandwich » entre la rondelle 160d et l'épaulement 1600 dans l'insert métallique 160c, de forme annulaire. Selon cette variante, le diamètre du couvercle 170 est réduit pour s'ajuster sur le col 160a et est configuré pour fermer l'ouverture polaire de l'enveloppe extérieure 12.

La **Fig. 5** est une coupe longitudinale selon un plan comprenant l'axe longitudinal 100 commun à la cuve interne 14 et à l'enveloppe extérieure 12 illustrant les éléments décrits sur la Fig. 5 après assemblage de la liaison coulissante.

Avantageusement, les liaisons coulissantes opérées selon les exemples décrits en utilisant un élément amortisseur en matériau déformable, flexible, tel que de l'élastomère, comprenant éventuellement des inserts métalliques de renfort ou plus exactement d'ajustement des propriétés de quasi-incompressibilité et de résistance au cisaillement, permettent d'opérer une liaison coulissante entre une extrémité au moins de la cuve interne et un pôle de l'enveloppe extérieure d'un réservoir cryogénique situé du même côté que ladite extrémité, par calage et sans risque de détériorations liées à des frottements répétés d'une pièce sur une autre pièce.

Bien évidemment, les exemples de réalisation décrits ne sont pas limitatifs et d'autres variantes peuvent exister. Par exemple, selon le matériau utilisé pour la fabrication du col 160c, le filetage recevant l'écrou 160e et l'épaulement 1600 peuvent être directement agencés dans la surface intérieure du col 160c. Si l'insert métallique est requis lorsque le col 160c est réalisé en matériau composite (par exemple un matériau à base de fibres de verre ou de fibres de carbones), et qu'il est préférable lorsque le col 160c est réalisé en alliage d'aluminium, il est toutefois optionnel si le col 160c est réalisé en acier.

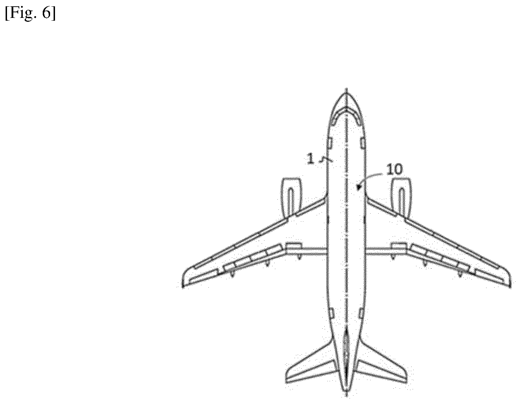

La **Fig. 6** représente un aéronef 1 comprenant au moins le réservoir cryogénique 10 ou un ou plusieurs réservoirs similaires à celui-ci, c'est-à-dire présentant les caractéristiques décrites du réservoir 10. Ceci est particulièrement avantageux à bord d'un aéronef pour pallier les problèmes mentionnés des réservoirs cryogéniques selon l'art antérieur.

## Revendications

1. Réservoir (10) de stockage d'un fluide cryogénique (11) comprenant une cuve interne (14) configurée pour ledit stockage dudit fluide (11) et logée dans une enveloppe extérieure (12), la cuve interne (14) et l'enveloppe extérieure (12) présentant un axe longitudinal (100) commun, de sorte qu'un volume d'isolation thermique (13) enveloppe la cuve interne (14) et que ladite enveloppe extérieure (12) enveloppe ledit volume (13) réparti autour de la cuve interne (14), ledit réservoir (10) étant tel que :
- au moins un élément amortisseur (16) en matériau déformable est inséré entre une extrémité (14a) de ladite cuve interne (14) et ladite enveloppe extérieure (13) et opère un calage de la cuve interne (14) par rapport à l'enveloppe extérieure (12) ;
- l'axe longitudinal (100) commun à ladite cuve interne (14) et à ladite enveloppe extérieure (12) définit une direction X ;
- ledit élément amortisseur (16) est fixé d'une part à ladite extrémité (14a) de la cuve interne (14) et d'autre part à ladite enveloppe extérieure (12) et est configuré pour opérer le dit calage en positionnant ladite extrémité (14a) de la cuve interne (14) par rapport à ladite enveloppe extérieure (12) lorsque ladite extrémité (14a) de la cuve interne se déplace en translation selon la direction X ; et
- des premiers moyens de fixation (140) sont agencés pour opérer une attache dudit élément amortisseur (16) sur l'extrémité (14a) de ladite cuve interne (14) et des deuxièmes moyens de fixation (160) sont agencés pour opérer une attache dudit élément amortisseur (16) sur une surface intérieure de ladite enveloppe extérieure (12),
**caractérisé en ce que** ledit élément amortisseur (16) présente une forme de bague, et lesdits premiers moyens de fixation (140) comprennent un manchon (140a, 140d) fixé à l'extrémité (14a) de la cuve interne (14) et présentant un premier épaulement (1400) et un filetage configurés pour opérer une fixation dudit élément amortisseur (16) autour d'une portion (140a) dudit manchon (140a, 140d), contre ledit premier épaulement (1400), et un maintien dudit élément amortisseur (16) contre ledit premier épaulement (1400) par serrage d'un ensemble rondelle (140b) - écrou (140c) sur ladite portion de manchon (140a), et dans lequel lesdits deuxièmes moyens de fixation (160) comprennent un col (160a) formé autour d'une ouverture à une extrémité de l'enveloppe extérieure (12) située du même côté du réservoir que l'extrémité (14a) de la cuve interne (14), et
- le col présente un deuxième épaulement (1600), et une bague de blocage (160b) sertie sur ledit col (160a) et configurée pour maintenir ledit élément amortisseur (16) contre ledit deuxième épaulement (1600), ou
- la surface intérieure du col (160a) comprend une rainure dans laquelle est inséré un insert métallique annulaire (160c) ou un taraudage dans lequel est vissé l'insert métallique annulaire (160c) dont la surface intérieure présente un deuxième épaulement (1600) et un filetage configurés pour opérer un maintien dudit élément amortisseur (16) contre ledit deuxième épaulement (1600) par serrage d'un ensemble rondelle (160d) - écrou (160e) dans ledit insert métallique annulaire (160c).

2. Réservoir (10) de stockage d'un fluide cryogénique selon la revendication précédente, dans lequel le matériau déformable est de l'élastomère.

3. Réservoir (10) de stockage d'un fluide cryogénique selon l'une quelconque des revendications précédentes, dans lequel le matériau déformable comprend une pluralité d'inserts métalliques agencés parallèlement à la direction X.

4. Aéronef comprenant au moins un réservoir (10) de stockage d'un fluide cryogénique selon l'une quelconque des revendications précédentes.

## Patentansprüche

1. Tank (10) zur Lagerung eines kryogenen Fluids (11), umfassend einen inneren Behälter (14), der zu der Lagerung des Fluids (11) ausgestaltet ist und in einer äußeren Hülle (12) aufgenommen ist, wobei der innere Behälter (14) und die äußere Hülle (12) eine gemeinsame Längsachse (100) aufweisen, so dass ein Volumen zur thermischen Isolation (13) den inneren Behälter (14) umhüllt und die äußere Hülle (12) das um den inneren Behälter (14) herum verteilte Volumen (13) umhüllt, wobei der Tank (10) dergestalt ist, dass:
- mindestens ein dämpfendes Element (16) aus verformbarem Material zwischen einem Ende (14a) des inneren Behälters (14) und der äußeren Hülle (13) eingesetzt ist und ein Verkeilen des inneren Behälters (14) in Bezug auf die äußere Hülle (12) vornimmt;
- die Längsachse (100), die dem inneren Behälter (14) und der äußeren Hülle (12) gemeinsam ist, eine Richtung X definiert;
- das dämpfende Element (16) zum einen an dem Ende (14a) des inneren Behälters (14) und zum anderen an der äußeren Hülle (12) fixiert ist und dazu ausgestaltet ist, das Verkeilen vorzunehmen, indem es das Ende (14a) des inneren Behälters (14) in Bezug auf die äußere Hülle (12) positioniert, wenn sich das Ende (14a) des inneren Behälters translatorisch entlang der Richtung X bewegt; und
- erste Fixierungsmittel (140) dazu eingerichtet sind, eine Befestigung des dämpfenden Elements (16) an dem Ende (14a) des inneren Behälters (14) vorzunehmen, und zweite Fixierungsmittel (160) dazu eingerichtet sind, eine Befestigung des dämpfenden Elements (16) an einer inneren Fläche der äußeren Hülle (12) vorzunehmen,
**dadurch gekennzeichnet, dass** das dämpfende Element (16) eine Ringform aufweist und die ersten Fixierungsmittel (140) eine Hülse (140a, 140d) umfassen, die an dem Ende (14a) des inneren Behälters (14) fixiert ist und einen ersten Absatz (1400) und ein Gewinde aufweist, die dazu ausgestaltet sind, eine Fixierung des dämpfenden Elements (16) um einen Abschnitt (140a) der Hülse (140a, 140d) herum gegen den ersten Absatz (1400) und ein Halten des dämpfenden Elements (16) gegen den ersten Absatz (1400) durch Festziehen einer Anordnung aus Scheibe (140b) und Mutter (140c) auf dem Hülsenabschnitt (140a) vorzunehmen, und wobei die zweiten Fixierungsmittel (160) einen Hals (160a) umfassen, der um eine Öffnung herum an einem Ende der äußeren Hülle (12) gebildet ist, das auf derselben Seite des Tanks wie das Ende (14a) des inneren Behälters (14) gelegen ist, und
- der Hals einen zweiten Absatz (1600) aufweist und einen Sicherungsring (160b), der auf dem Hals (160a) festgezogen ist und dazu ausgestaltet ist, das dämpfende Element (16) gegen den zweiten Absatz (1600) zu halten, oder
- die innere Fläche des Halses (160a) eine Nut umfasst, in die ein ringförmiger metallischer Einsatz (160c) eingesetzt ist, oder ein Innengewinde, in das der ringförmige metallische Einsatz (160c) geschraubt ist, dessen innere Fläche einen zweiten Absatz (1600) und ein Gewinde aufweist, die dazu ausgestaltet sind, ein Halten des dämpfenden Elements (16) gegen den zweiten Absatz (1600) durch Festziehen einer Anordnung aus Scheibe (160d) und Mutter (160e) in dem ringförmigen metallischen Einsatz (160c) vorzunehmen.

2. Tank (10) zur Lagerung eines kryogenen Fluids nach dem vorhergehenden Anspruch, wobei das verformbare Material ein Elastomer ist.

3. Tank (10) zur Lagerung eines kryogenen Fluids nach einem der vorhergehenden Ansprüche, wobei das verformbare Material eine Mehrzahl von metallischen Einsätzen umfasst, die parallel zu der Richtung X angeordnet sind.

4. Flugzeug, umfassend mindestens einen Tank (10) zur Lagerung eines kryogenen Fluids nach einem der vorhergehenden Ansprüche.

## Claims

1. Storage tank (10) for a cryogenic fluid (11) comprising an inner tank (14) that is configured to store said fluid (11) and that is seated in an outer envelope (12), the inner tank (14) and the outer envelope (12) having a shared longitudinal axis (100), such that a thermal insulation volume (13) surrounds the inner tank (14), and that said outer envelope (12) surrounds said volume (13) about the inner tank (14), said tank (10) being such that:
- at least one damping element (16) made of a deformable material is inserted between one end (14a) of said inner tank (14) and said outer envelope (13) to wedge the inner tank (14) against the outer envelope (12),
- the shared longitudinal axis (100) of said inner tank (14) and said outer envelope (12) defines a direction X,
- said damping element (16) is fastened firstly to said end (14a) of the inner tank (14) and secondly to said outer envelope (12), and is arranged to create said wedge by positioning said end (14a) of the inner tank (14) in relation to said outer envelope (12) when said end (14a) of the inner tank moves in translation along the direction X, and
- first fastening means (140) are arranged to attach said damping element (16) to the end (14a) of said inner tank (14) and second fastening means (160) are arranged to attach said damping element (16) to an inner surface of said outer envelope (12),
**characterized in that** said damping element (16) is ring-shaped, and said first fastening means (140) comprise a sleeve (140a, 140d) fastened to the end (14a) of the inner tank (14) and have a first shoulder (1400) and a thread that are configured to fasten said damping element (16) about a portion (140a) of said sleeve (140a, 140d), against said first shoulder (1400), and to hold said damping element (16) against said first shoulder (1400) by tightening an assembly comprising a washer (140b) and a nut (140c) onto said sleeve portion (140a), and in which said second fastening means (160) comprise a neck (160a) formed about an opening at one end of the outer envelope (12) positioned on the same side of the tank as the end (14a) of the inner tank (14), and
- the neck has a second shoulder (1600), and a locking ring (160b) crimped onto said neck (160a) and configured to hold said damping element (16) against said second shoulder (1600), or
- the inner surface of the neck (160a) has a slot into which a ring-shaped metal insert (160c) is inserted, or a threaded hole into which the ring-shaped metal insert (160c) is screwed, the inner surface of said insert having a second shoulder (1600) and a thread that are arranged to hold said damping element (16) against said second shoulder (1600) by tightening an assembly comprising a washer (160d) and a nut (160e) in said ring-shaped metal insert (160c).

2. Storage tank (10) for a cryogenic fluid according to the preceding claim, in which the deformable material is an elastomer.

3. Storage tank (10) for a cryogenic fluid according to any one of the preceding claims, in which the deformable material has a plurality of metal inserts arranged parallel to the direction X.

4. Aircraft including at least one storage tank (10) for a cryogenic fluid according to any one of the preceding claims.
